(19) Europäisches Patentamt

European Patent Office

Office européen des brevets

(11) **EP 4 124 546 A1**

(12) **EUROPEAN PATENT APPLICATION**

(43) Date of publication:
**01.02.2023 Bulletin 2023/05**

(21) Application number: **21188262.6**

(22) Date of filing: **28.07.2021**

(51) International Patent Classification (IPC):
**B62D 33/04** (2006.01)   **B65D 88/12** (2006.01)
**B65D 88/74** (2006.01)

(52) Cooperative Patent Classification (CPC):
**B62D 33/048; B65D 88/745; B65D 90/008;
B65D 90/14**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Schmitz Cargobull AG
48341 Altenberge (DE)**

(72) Inventors:
• **Dechering, Markus
48691 Vreden (DE)**

• **Flacke, Norbert
45894 Gelsenkirchen (DE)**
• **Paulavicius, Andrius
08232 Vilnius (LT)**
• **Niewerth, Markus
48683 Ahaus (DE)**
• **Hintemann, Ulrich
48739 Legden (DE)**

(74) Representative: **Cohausz & Florack
Patent- & Rechtsanwälte
Partnerschaftsgesellschaft mbB
Bleichstraße 14
40211 Düsseldorf (DE)**

(54) **BODY WITH TEMPERING UNIT AND LOAD THROUGH OPTION, SWAP BODY AND TRUCK TRAILER COMPRISING SUCH BODY**

(57)    The invention provides a body for a transporting device, such as a swap body or a truck trailer. The body has a cuboid shape and delimits with a roof (9), a floor (10), two longitudinal side walls (5, 6) which extend on opposite sides of the swap body (1) in the longitudinal direction (L) thereof, a first end wall (7) which extends at one end of the body (2) between the longitudinal side walls (5, 6), and with a second end wall (8) which extends at the opposite end of the body (2) between the longitudinal side walls (5, 6), a cargo space (11) provided for receiving the goods (G,RW) to be transported. An access (13, 14) to the cargo space (11) is provided in each of the two end walls (7, 8), and a temperature control device (TCD) is provided for blowing temperature-controlled air into the cargo space (11). The planes (VL1,VL2,VS1 ,VS2, H1,H2), in which the outer surfaces (9a,5a,6a,7a,8a) of the roof (9), of the longitudinal side walls (5,6) and of the end walls (7,8) are located respectively, define a cuboidal envelope (E) of the body (2). To make a maximized loading volume available within the legally permissible external dimensions of the body, according to the invention, the temperature control device (TCD) is arranged within the space delimited by the envelope (E) in a corner section (A) which is delimited towards the surroundings (U) by the plane (VS1) in which the outer surface (7a) of one of the end walls (7,8) lies, by the plane (VL1) in which the outer surface (5a) of one of the longitudinal walls (5,6) lies, and by the plane (H1) in which the outer surface (9a) of the roof (9) lies, the height (HA) of the corner section (A) being smaller than the height of the cargo space, the width (BA) of the corner section (A) being smaller than the width of the cargo space (11) and the length (LA) of the corner section (A) being smaller than the length of the cargo space (11).

Fig. 1

EP 4 124 546 A1

## Description

The invention relates to a body intended for a transporting device for transporting goods, the body comprising a cargo space, in which during use the goods to be transported are stowed . The body has a cuboid shape and delimits its cargo space with a roof, a floor, two longitudinal side walls extending on opposite sides of the body in the longitudinal direction thereof, a first end wall extending at one end of the body between the longitudinal side walls, and a second end wall extending at the opposite end of the body between the longitudinal side walls. Accordingly, the planes in which the outer surfaces of the roof, the longitudinal side walls and the end walls associated with the surroundings are located define a cuboidal envelope of the body. Access to the cargo space of the body is provided by means of accesses, one of which is provided in each of the end faces of the body. In addition, the body is equipped with a temperature control unit which during use blows temperature-controlled air into the cargo space.

Bodies designed in accordance with the invention are particularly intended for swap bodies, also known as swap boxes or swap containers. Such swap bodies are interchangeable load carriers that can be placed on different vehicles like containers. For that purpose swap bodies are equipped in such a way that they can, for example, be driven under by a commercial vehicle or placed on a railroad car by means of a crane and can also be separated from the respective vehicle again. To enable this, swap bodies usually have supports that can be swivelled from a transport position in which they are pivoted against the floor of the swap body into a support position in which they support the body of the swap body above the respective ground at a height at which it can be driven under by the chassis of the commercial vehicle (see https://en.wikipedia.org/wiki/Swap_body, found July 6, 2021). The standard DIN EN 284 specifies the external dimensions that swap bodies must comply with.

Bodies of the type in question here are also used on truck trailers used to transport sensitive goods. Truck trailers equipped in this way usually have a chassis on which the wheels of the trailer are mounted and which supports the body.

For the transport of temperature-sensitive goods, bodies of swap bodies or truck trailers are usually equipped with a temperature control unit, also known as a "transport refrigeration unit". Usually this temperature control unit is mounted on the end wall or roof of the swap body and supplies the cargo space with temperature-controlled air. In this way, the atmosphere prevailing in the cargo space is kept at a specific temperature at which the goods being transported achieve optimum shelf life. Depending on the respective ambient conditions, the temperature control can consist, for example, of cooling for the transport of frozen goods or heat-sensitive foodstuffs or of heating the air blown into the cargo space for the transport of cold-sensitive foodstuffs, plants or the like.

To enable easy loading of a convoy comprising for example at least two swap bodies in one train, the swap bodies can each be provided with an access point on both end walls. In this way, the loading bridges arranged close together in a row can be loaded and unloaded starting from the access point of the last loading bridge in the row without having to interrupt or break up the row of loading bridges. This possibility of loading and unloading several interlinked swap bodies is also referred to as "through-loading".

Likewise, a through-loading possibility arises in the case of truck-trailer combinations in which the towing truck is equipped with a body that has access to the body's cargo space at its rear, and in which the truck trailer pulled by the towing truck has access to its cargo space at each of its two end walls.

In the case of transport swap bodies or truck trailers where a temperature control unit is mounted on one of the end walls of the respective body, additional measures are required to enable such a through-loading option.

In EP 3 437 926 A1, for example, a swap body of the type indicated at the outset has been proposed in which the temperature control unit is mounted on one end face in such a way that it can be moved from a first position, in which it is seated on the end wall of the swap body assigned to it, to a second position, in which access to the cargo space of the swap body is also possible from the end face on which the temperature control unit is located during transport.

Against the background of the prior art explained above, the object has arisen of creating, with minimum technical effort, a body for a transporting device, such as a swap body or a truck trailer, suitable for through-loading and equipped with a temperature control unit, in which a maximized loading volume is available within the legally permissible external dimensions.

The invention has solved this object by a body for a transporting device having at least the features indicated in claim 1, such body being particularly suitable for swap bodies disclosed in claim 11 or for truck trailers of the kind disclosed in claim 12.

Advantageous embodiments of the invention are indicated in the dependent claims and, like the general idea of the invention, are explained in detail below.

In accordance with the prior art described at the outset of this description a body according to the invention which is intended for a transporting device for transporting goods, such as a swap body or a truck trailer, has a cuboid shape and delimits with a roof, a floor, two longitudinal side walls, which extend on opposite sides of the body in the longitudinal direction thereof, a first end wall which extends at one end of the body between the longitudinal side walls, and with a second end wall which extends at the opposite end of the body between the longitudinal side walls, a cargo space provided for receiving the goods to be transported, an access to the cargo space being provided in each of the two end walls and a temperature control device being provided for blowing temperature-controlled air into the cargo space, wherein the planes, in which the outer surfaces of the roof, of the longitudinal side walls and of the end walls are located respectively, define a cuboidal envelope of the body.

According to the invention, the temperature control device is now arranged within the space bounded by the envelope in a corner section which is bounded towards the surroundings by the plane in which the outer surface of one of the end walls lies, by the plane in which the outer surface of one of the longitudinal walls lies, and by the plane in which the outer surface of the roof lies, the height of the corner section being smaller than the height of the cargo space, the width of the corner section being smaller than the width of the cargo space and the length of the corner section being smaller than the length of the cargo space.

In a body according to the invention, accordingly, a corner section is recessed within the space bounded by the envelope of the body, in which the temperature control unit is located. The dimensions of this corner section are limited in such a way that sufficient space remains laterally between the corner section provided for the temperature control unit and the longitudinal side wall spaced therefrom for access to the load compartment and that also space available below the corner section for stowing cargo.

The corner area provided for the temperature control unit according to the invention is thus at the expense of the volume that can be used in the cargo space for the goods to be transported. However, compared with a body for a transporting device in which the temperature control unit is mounted on the end face, the arrangement of the temperature control unit according to the invention nevertheless has the advantage that the space required for the temperature control unit outside the body in the prior art can be added to the cargo space in a body according to the invention. As a result, while complying with the legally prescribed external dimensions of the body, a significant increase in the effectively usable cargo space volume is achieved compared with conventional bodies in which the temperature control unit is arranged outside the body. At the same time, despite the space allocated to the corner area of the temperature control unit according to the invention, there is still room for sufficiently large access to the load compartment on the respective end side to which the corner area is adjacent.

A body according to the invention can be manufactured with minimized effort. Despite the placement of the temperature control unit in the envelope of the body, no mechanically complex and failure-prone constructions are required to allow access to the cargo space also from the front side of the body, which is adjacent to the corner area in which the temperature control unit is positioned according to the invention.

According to a first embodiment of the invention, the corner section is shielded from the surroundings of the body by one section each of the roof, the respective end wall and the respective longitudinal side wall. In this embodiment of the invention, the temperature control unit is thus separated from the surroundings and optimally protected without any special further measures. The corner area can be accessible from the cargo area or from the outside of the body. For this purpose, suitable openings can be provided in the respective wall, in the roof or in the walls which separate the corner area from the cargo space, which openings can preferably be tightly closed when not in use.

As an alternative to an outwardly closed design of the corner section provided for the temperature control unit according to the invention, the corner section can also be open on its sides associated with the roof, the respective end wall and/or the respective longitudinal side wall. In this embodiment, the respective end wall, longitudinal side wall and roof have a correspondingly shaped recess in their corner regions associated with the corner section provided in accordance with the invention, so that the corner section with the temperature control device positioned therein is freely accessible from the outside of the body for maintenance purposes. In addition to the ease of access, this can have the advantage that heat generated during operation of the temperature control unit is easily dissipated and additional volume is available for the temperature control unit that would otherwise be taken up by the respective end wall, longitudinal side wall and roof. These generally have a large wall thickness to achieve optimum thermal insulation.

In particular, in the case where the corner section provided for the temperature control device according to the invention is designed to be open at the sides and in the roof section, it can be advantageous if the temperature control device to be arranged in the corner section provided according to the invention comprises a housing whose dimensions are at most equal to the dimensions of the corner section. Optimally, such a housing is designed in such a way that the outer surfaces of the side walls of the housing associated in each case with the roof, the respective end wall and the respective longitudinal side wall lie in the plane in which the respective outer surface of the roof, the respective end wall and the respective longitudinal side wall lie. In this case, the housing fills the recesses which have been cut out in the respective end wall, longitudinal side wall and roof for the corner section, so that a self-contained, visually impeccably cuboidal exterior of the body is obtained.

The limitation according to the invention of the dimensions of the corner section in which the temperature control device sits in a body according to the invention allows the maximum available height of the cargo space to be used for access to the cargo space in the region of the end wall to which the corner section provided according to the invention adjoins. Accordingly, an advantageous embodiment of the invention provides that the access provided in the end wall to which the corner section is adjacent extends in the height direction beyond the underside of the corner section, that is, that the corner section provided in accordance with the invention and the access in the associated end wall overlap in the height direction. In particular, the access provided in the end wall to which the corner section is adjacent may have the same height as the access provided in the other end wall. The width of the corner section measured parallel to the respective end wall can be easily limited so that sufficient space is available for loading through, for example with a forklift truck.

As already mentioned, the corner section provided for the temperature control device according to the invention may be delimited towards the cargo space of the body by inner walls and a floor. Of the interior walls in question, one may extend parallel to the longitudinal walls of the body and another parallel to the end walls of the body, while the floor is aligned parallel to the roof of the body. The corner section provided according to the invention then has a cuboid shape. In order to support the inner walls and/or the floor, a frame structure may be provided which is supported on the base frame which carries the body.

The temperature control unit positioned in the corner section according to the invention usually comprises a compressor, a preferably electric drive for the compressor, a condenser, a heat exchanger, a control and regulating device, and at least one fan. Although it would in principle be possible to equip the temperature control device with its own drive motor for generating the electrical energy required for its operation, in the case of bodies of the type in question here it has proved useful to use an external energy source for the energy supply. For example, if the body according to the invention is part of a swap body, the required electrical energy can be provided by the commercial vehicle or rail vehicle transporting the swap body. The same applies if the body according to the invention is part of a truck trailer towed by a tow truck, which provides the required electrical energy.

As already mentioned, the arrangement of the temperature control unit in an upper corner section of the body allows the free space below and next to the temperature control unit to be used additionally as cargo space.

The goods to be transported in bodies of the type in question here are generally stowed in packages, boxes or the like, the dimensions of which comply with certain standard specifications. For example, the standard DIN EN 13698-1 specifies that a so-called Euro pallet, on which the goods to be transported are placed, should have a base area of 800 mm x 1,200 mm. Comparable regulations exist for standard sizes of cardboard material packages, of trolleys, and the like. The packing units designed in accordance with the relevant standard specifications thus represent a standard packing volume for which at least a fixed width and a fixed length apply.

In order to ensure optimum utilization of space also in the area of the cargo space in which, according to the invention, the corner section for the temperature control unit is provided, it is expedient, against this background, if the width of the corner area measured parallel to the end faces of the body is dimensioned in such a way that the following applies to the free distance A which exists between the corner section and the longitudinal side wall spaced therefrom and not adjacent to the corner section:

$$SB \times n \leq BS < S \times (n+1)$$

where SB is the width of a standard packing volume in which the cargo to be stowed in the cargo space is packed, and n is an integer number. This dimensioning ensures, on the one hand, that the respective number n of packing units of the goods to be transported can be positioned next to each other in the cargo space and, at the same time, that sufficient space is available to allow trouble-free loading and unloading. It is particularly advantageous if the distance BS is equal to an integral multiple of the width SB, whereby in addition a small oversize of, for example, up to 10% of a width SB can be provided for the distance BS, which enables easy maneuvering and positioning of the goods to be transported during loading and unloading.

Irrespective of the respective packing volume, it has been found to be practical if the free width of the access in the end wall associated with the corner section provided in accordance with the invention, measured parallel to the respective end wall, is at least 2/3 of the width of the end wall concerned. In this case, taking into account the additional space required for the respective closure of the access, the width of the corner section is thus to be limited in such a way that a forklift truck or other vehicles used for this purpose can drive through the access without any problems for loading.

If a certain height HS is also specified for the packing volume of the goods transported in each case in the body according to the invention, it may be equally expedient, with a view to optimum utilization of space, if the following applies to the free height HF existing between the underside of the corner section and the cargo space:

$$SH \times i \leq HF < SH \times (i+1)$$

where SH is the height of a standard packing volume in which the cargo to be stowed in the cargo space is packed, and i is an integer number.

As a rule of thumb for dimensioning the height of the corner section provided for the temperature control unit according to the invention, it can be assumed that the height of the free space in the cargo space under the temperature control unit should correspond to at least 2/3 of the height of the longitudinal side walls to allow optimum utilization of the space in question for stowing goods to be transported.

The accesses at the first and second ends can be designed in a known manner as double doors, multi-leaf rear gates or rolling gates.

In accordance with the explanations give above, a body according to the invention is especially intended for a swap body which comprises the body configured according to the invention and supporting devices which are connected with the body and which are swivable between a transport position in which they are pivoted against the floor of the body and a support position in which they support the body above a ground at a height at which the body can be driven under by a chassis of the commercial vehicle.

Similarly, the body according to the invention is suitable for a truck trailer, which comprises a chassis on which the wheels of the trailer are mounted and a body designed in accordance with the invention said body being supported by the chassis.

The invention is explained in more detail below by means of a drawing illustrating an example of an embodiment. The figures show schematically in each case:

Fig. 1      a swap body in the closed state in a perspective view from the front;

Fig. 1a     a swap body in the closed state in a view corresponding to Fig. 1;

Fig. 2      the swap body in the closed state in a perspective view from the rear;

Fig. 3      the swap body with an open access in a view corresponding to Fig. 1;

Fig. 4      the swap body in the loaded state with Euro pallets in a horizontal section along the section line Y - Y drawn in Fig. 1;

Fig. 5      the swap body in the state loaded with trolleys in a horizontal section corresponding to Fig. 4;

Fig. 6      a composite formed by two swap bodies in a longitudinal section.

The swap body 1 comprises a cuboid body 2 and a rectangular base frame 3. When the body 2 is closed, the body 2 and the base frame 3 occupy, for example, together the volume of a standard container.

The conventionally designed base frame 3 of the swap body 1 carries the body 2 and has, in the area of each of its four corners, a support device 4a to 4d in a likewise known manner. The support devices 4a to 4d can be adjusted between a support position, in which they support the body 2 over a ground, and a travel position, in which they are pivoted to the base frame 3. The support position is required when the swap body 1 is parked in a waiting position. In this position the base frame 3 with the body 2 is held by means of the support devices 4a - 4d at a height at which the base frame 3 can be driven under by a commercial vehicle not shown here to be placed on the chassis of the commercial vehicle.

The commercial vehicle is, for example, a truck which chassis is equipped to receive the swap body, or a correspondingly equipped trailer. After being placed on the commercial vehicle, the support devices 4a - 4d are pivoted into the travel position, in which they rest against the base frame 3 and do not interfere with chassis of the commercial vehicle.

Similarly, the base frame 3 may have attachment points for a hoist with which a crane can place the swap body 1 on a railroad car. Here, too, the support devices 4a - 4d are pivoted into the travel position as soon as the crane has lifted the swap body 1. In this way, the swap body 1 after being placed on the railroad car only occupies the height of the superstructure 2 and the base frame 3 during rail transport.

The cuboid body 2 encloses a cargo space 11 with two longitudinal side walls 5,6, two end side walls 7,8, a roof 9 and a floor 10. The floor 10 lies on or is integrated into the base frame 3 of the swap body 1. The floor 10 has a loading surface 12 on its upper side assigned to the cargo space 11. On the loading surface 12 the goods to be transported respectively are placed.

The longitudinal side walls 5,6 each extend along one of the longitudinal sides of the floor 10. One end side wall 7 extends at the first end side of the body 2 between the associated end edges of the longitudinal side walls 5,6. The other end side wall 8 extends between the associated edges of the longitudinal side walls 5,6 at the end side of the body 2 opposite the first end side wall 8. The roof 9 is supported by the longitudinal side walls 5,6 and the end side walls 7,8. In each of the end side walls 7, 8, an access 13,14 is provided to the cargo space 11 for loading and unloading cargo G to be transported.

The longitudinal side walls 5,6, the end side walls 7,8 and the roof 9 are composed in a manner known per se of thermally insulating panels. Each of them comprise, for example, an outer cover layer formed from sheet steel, a core layer consisting of a foam material and an inner cover layer also formed from sheet steel. The panels of the longitudinal side walls 5,6, the end side walls 7,8 and the roof 9 are held in an equally known manner in a framework 15 formed from prefabricated profiles and being supported on the base frame 3.

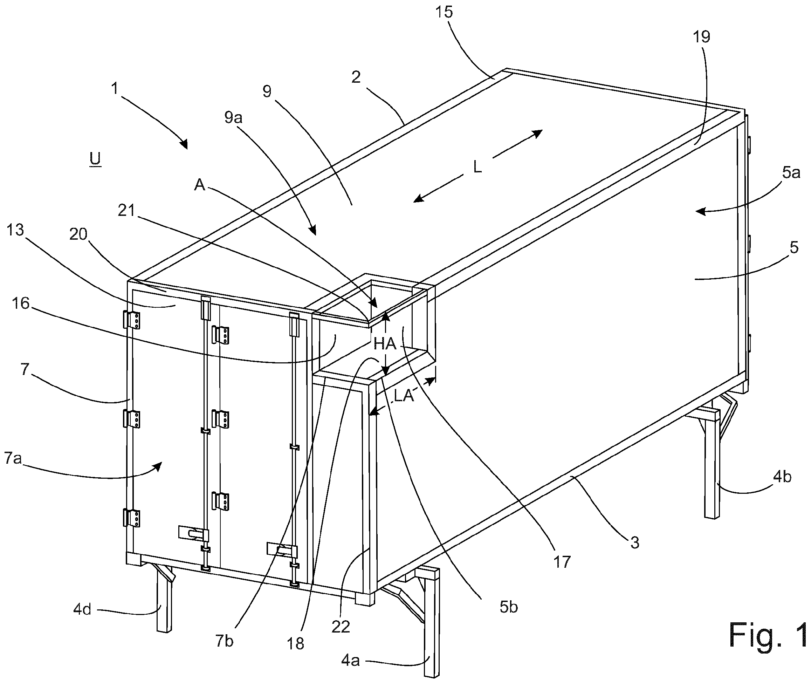

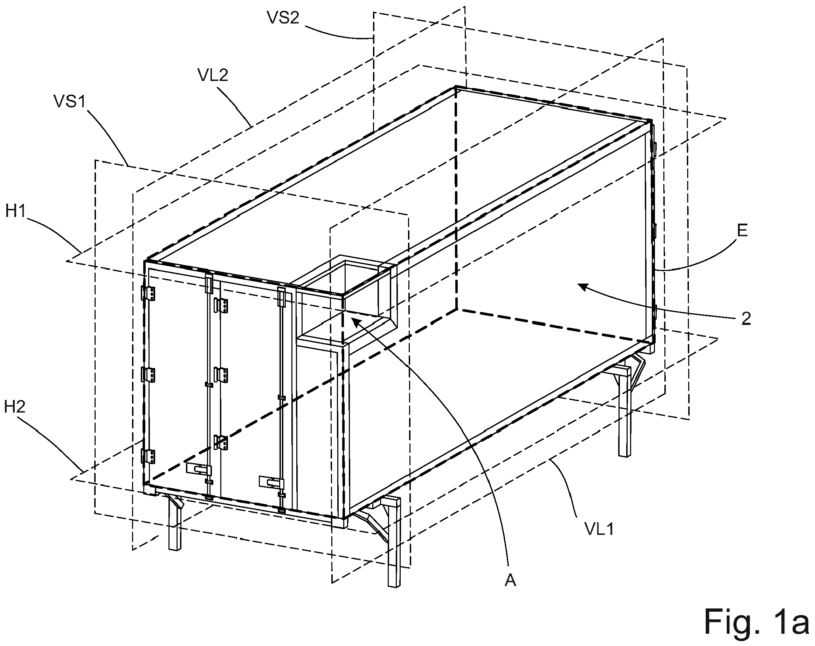

The vertical planes VL1,VL2, in which the outer surfaces 5a,6a of the longitudinal side walls 5,6 are located in parallel arrangement, the transverse vertical planes VS1,VS2, in which the parallel outer surfaces 7a, 8a of the end side walls 7,8 lie, and the horizontal planes H1,H2, in which the loading surface 12 and the outer surface 9a of the roof 9 aligned parallel thereto lie, delimit a cuboidal envelope E of the body 2 of the swap body 1 which is marked in thick dashed lines in Fig. 1a.

A corner section A is delimited on its outer sides by the vertical plane VL1 in which the outer surface 5a of the longitudinal side wall 5 lies, the vertical plane VS1 in which the outer surface 7a of the end side wall 7 lies, and the horizontal plane H1 in which the outer surface 9a of the roof 9 lies. In the embodiment shown here the corner section A is opened to the surroundings U and has a cuboid shape stretched in the longitudinal direction L of the swap body 1. Accordingly the longitudinal side wall 5, the end side wall 7 and the roof 9 each have a rectangular recess 5b,7b,9b in the corner section A.

At the same time, the corner section A is delimited on its inner sides associated with the cargo space 11 by an inner longitudinal wall 16 which is aligned parallel to the longitudinal side walls 5, 6, an inner end wall 17 which is aligned parallel to the end walls 7, 8, and an inner floor 18 which extends parallel to the roof 9 and to the floor 10. The inner longitudinal wall 16, the inner end wall 17 and the inner floor 18 of the corner section A do not have to be filled, but can optionally be delimited, for example by profile pieces, only in such a way that they are prepared for mounting a transport refrigeration machine TCD in the corner section A.

The horizontally extending longitudinal side profile 19, by which the longitudinal side wall 5 is connected to the roof 9, and the horizontally extending end side profile 20, by which the end side wall 7 is connected to the roof, are extended beyond the cutouts 5a,7a and 9a of the longitudinal side wall 5, the end side wall 7 and the roof 9 so that they meet in an outer corner 21, which is arranged in the imaginary extension of the vertically aligned corner profile 22, via which the longitudinal side wall 5 and the end side wall 7 are connected to each other.

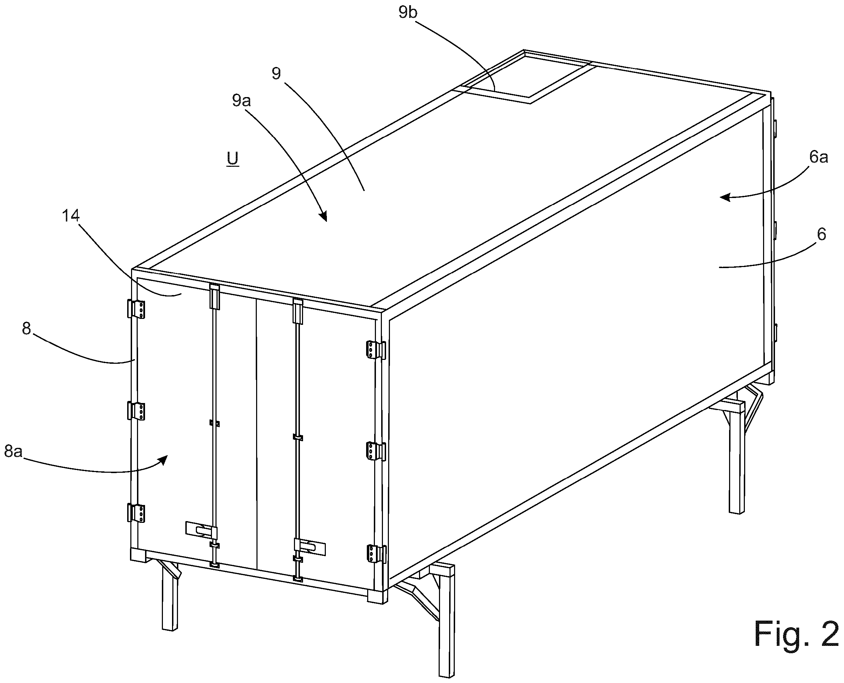

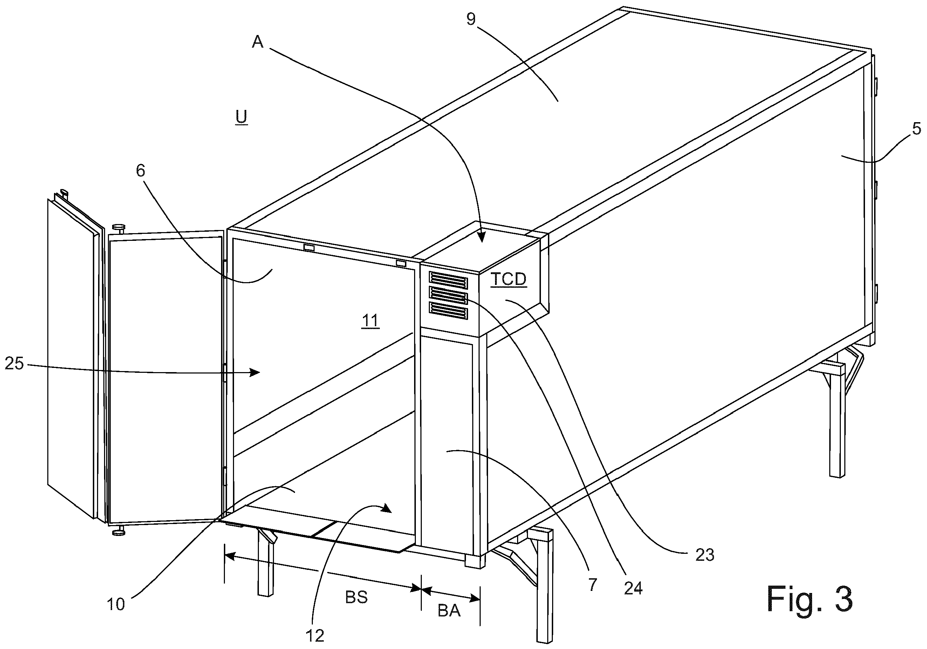

In Figures 1 and 2, the corner section A is empty for sake of clarity. However, for use, the transport refrigeration machine TCD is mounted in the corner section A, as shown in Figures 3 - 6.

The transport refrigeration machine TCD, which is designed in a conventional manner, has a housing 23 which shields its individual parts, such as compressor, electric drive for the compressor, condenser, heat exchanger, control and regulating device, fan, against the surroundings and the cargo space 11. It is provided with intake openings 24 for drawing in ambient air and injection openings, which are not visible here, for blowing tempered air into the cargo space 11. The transport refrigeration machine TCD does not have its own device for generating drive energy, but is supplied with the electrical energy required for drive via the on-board power supply system of the vehicle on which the swap body 1 is being transported during transport or via a local power supply system during the waiting time.

The outer dimensions of the housing 23 of the transport refrigeration machine TCD correspond to the outer dimensions of the corner section A, so that the transport refrigeration machine TCD fills the corner section A and, in doing so, nestles with its outer surfaces associated with the environment U against the planes VL1, VS1 and H1, which delimit the corner section A on its outer sides.

The length LA measured parallel to the longitudinal side walls 5,6 in the horizontal direction, the width BA measured parallel to the end side walls 7,8 in the horizontal direction and the height HA measured parallel to the end side walls 7,8 in the vertical direction of the space occupied by the corner section A are dimensioned in such a way that the free space available under and next to the corner section A in the cargo space 11 can continue to be used optimally for stowing cargo G packed in standard packing units.

Thus, the remaining height between the loading surface 12 and the underside of the corner section A is such that at least one trolley RW with a standard height can be pushed under the corner section A. In this way, the cargo space 11 can be loaded close together with trolleys RW without having to spare the corner section A.

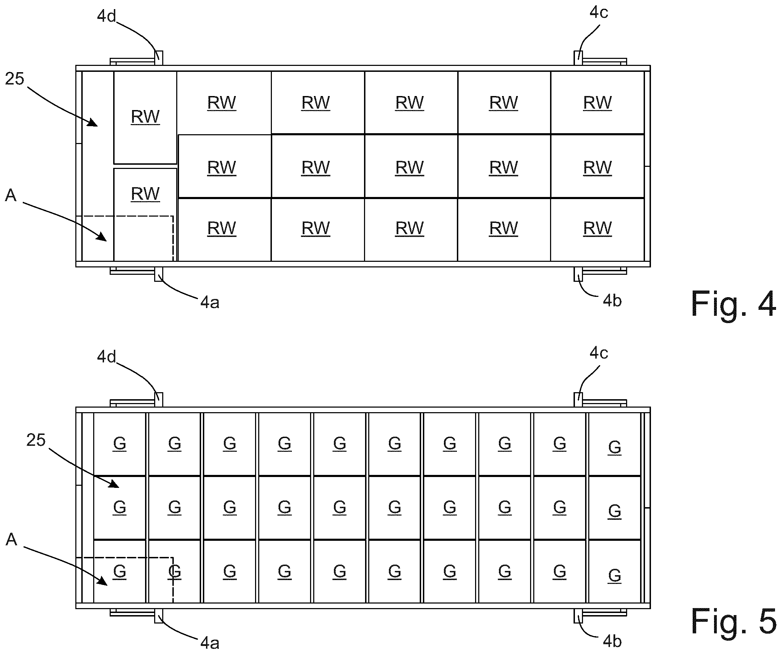

The width BA of the corner section A is such that there is a distance BS between its inner longitudinal wall 16 and the longitudinal side wall 6 remote from the corner section A, the distance BS being greater than the width of two standard roller carriages but less than the width of three stand-up roller carriages (Fig. 5). In this way, in the passage area 25 between the longitudinal inner wall 6 of the body 2 and the inner longitudinal wall 16 of the corner section A, two trolleys RW can stand side by side in the width direction, packed using the full height of the cargo space 11.

Likewise, the distance BS is dimensioned so that at least one standard Euro pallet can be placed in the passage area 25. Accordingly, even in the case of Euro pallets being used as a packing unit, maximum tight loading of the cargo space 11 is possible by utilizing the space available under the corner section A in the cargo space 11 (Fig. 4).

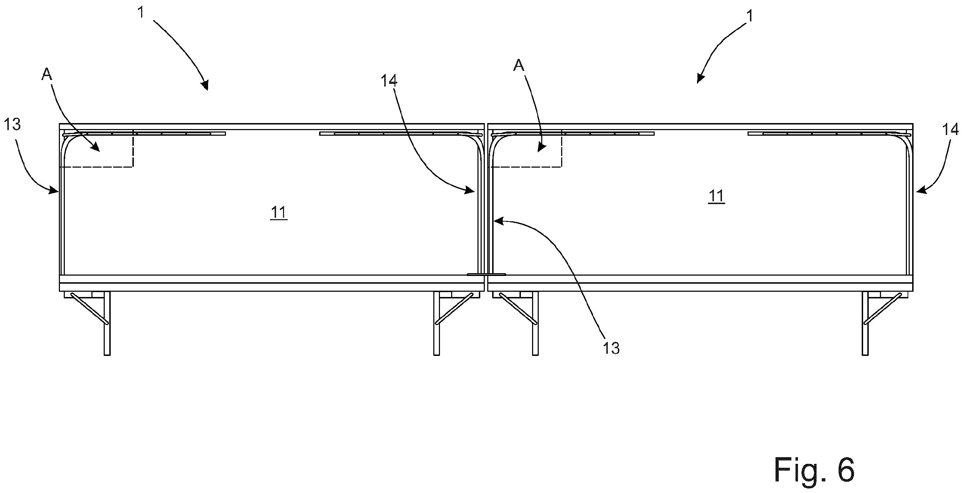

At the same time, the width BS is that large that, in the case of through-loading, a forklift truck or other means of transport can easily pass through the passage 25 and drive into or out of the cargo space 11 through the access 13. Despite the integration of the corner section A provided for the transport refrigeration unit TCD in accordance with the invention, this also allows undisturbed through-loading of swap bodies 1, which are lined up in a formation, i.e. standing end to end (Fig. 6).

The accesses 13,14 provided in the end walls 7,8 can be formed in a conventional manner by double doors, folding doors or rolling doors. Double doors have proved particularly useful as access points 14 at the end of swap bodies 1 where it is not envisaged that a further swap body 1 should be placed with its end against the end in question in order to form a composite unit for through-loading.

As demonstrated by the embodiment of the invention shown in Fig. 6 rolling doors, folding doors and the like, on the other hand, are suitable for accesses 13 in end faces of swap bodies 1 which are intended to be placed against the end face 13 of a further swap body 1 in order to form a composite in which the swap bodies 1 can be loaded through. In this case, rolling doors or folding doors allow the respective access to be opened without requiring greater space in the passage area 25 for the respective door element in the open state.

In practice, the width BS of the passage 25 and, consequently, the maximum width of the access 13 is two thirds of the width of the end wall 7. At the same time, the free height HF of the free space under the corner section A is at least two thirds of the height of the cargo space 11.

## REFERENCE NUMERALS

| 1 | Swap body |
|---|---|
| 2 | Cuboid body of the swap body 1 |
| 3 | Base frame of the swap body 1 |
| 4a to 4d | Supporting devices of the swap body 1 |
| 5,6 | Longitudinal side walls of the body 2 |
| 5a,6a | Outer surfaces of longitudinal side walls 5,6 |
| 5b | Recess of longitudinal side wall 5 |
| 7,8 | End side walls of the body 2 |
| 7a,8a | Outer surfaces of end side walls 7,8 |
| 7b | Recess of end side wall 7 |
| 9 | Roof of the body 2 |
| 9a | Outer surface of roof 9 |
| 9b | Recess of roof 9 |
| 10 | Floor of the body 2 |
| 11 | Cargo space |
| 12 | Loading surface |
| 13,14 | Accesses to the cargo space 11 in the end walls 7,8 |
| 15 | Framework of the body 2 |
| 16 | Inner longitudinal wall of corner section A |
| 17 | Inner end wall of corner section A |
| 18 | Inner floor of corner section A |
| 19 | Longitudinal side profile of the body 2 |
| 20 | End side profile of the body 2 |
| 21 | Outer corner of corner section A |
| 22 | Corner profile of the body 2 |
| 23 | Housing of the transport refrigeration machine TCD |
| 24 | Intake openings of the housing 23 |
| 25 | Passage area of the cargo space 11 |
| | |
| A | Corner section of body 2 |
| BA | Width of corner section A |
| BS | Distance between the corner section A and the longitudinal wall 6 (= width of passage section 25) |
| E | Envelope of body 2 |
| G | Cargo |
| H1 | Horizontal plane in which the loading surface 12 lies |
| H2 | Horizontal plane in which the outer surface 9a of the roof 9 lies |
| HA | Height of corner section A |
| L | Longitudinal direction of swap body 1 |
| LA | Length of corner section A |
| RW | Trolley |
| TCD | Transport refrigeration unit |
| U | Surroundings of swap body 1 |
| VL1 | Vertical plane in which the outer surface 5a is located |
| VL2 | Vertical plane in which the outer surface 6a 6 is located |
| VS1 | Vertical plane in which the outer surface of the end side wall 7 is located |
| VS2 | Vertical plane in which the outer surface of the end side wall 8 is located |

## Claims

1. A body for a transporting device for transporting goods,

   - wherein the body (2) has a cuboid shape,
   - wherein the body (2) delimits with a roof (9), a floor (10), two longitudinal side walls (5, 6) which extend on opposite sides of the swap body (1) in the longitudinal direction (L) thereof, a first end wall (7) which extends at one end of the body (2) between the longitudinal side walls (5, 6), and with a second end wall (8) which extends at the opposite end of the body (2) between the longitudinal side walls (5, 6), a cargo space (11) provided for receiving the goods (G,RW) to be transported, an access (13, 14) to the cargo space (11) being provided in each of the two end walls (7, 8), and
   - wherein the body (2) comprises a temperature control device (TCD) provided for blowing temperature-controlled air into the cargo space (11),

   wherein the planes (VL1,VL2,VS1,VS2,H1,H2), in which the outer surfaces (9a,5a,6a,7a,8a) of the roof (9), of the longitudinal side walls (5,6) and of the end walls (7,8) are located respectively, define a cuboidal envelope (E) of the body (2) of the body (2),
   **characterized in that**
   the temperature control device (TCD) is arranged within the space delimited by the envelope (E) in a corner section (A) which is delimited towards the surroundings (U) by the plane (VS1) in which the outer surface (7a) of one of the end walls (7,8) lies, by the plane (VL1) in which the outer surface (5a) of one of the longitudinal walls (5,6) lies, and by the plane (H1) in which the outer surface (9a) of the roof (9) lies the height (HA) of the corner section (A) being smaller than the height of the cargo space, the width (BA) of the corner section (A) being smaller than the width of the cargo space (11) and the length (LA) of the corner section (A) being smaller than the length of the cargo space (11).

**2.** The body according to claim 1, **characterized in that** the corner section (A) is delimited with respect to the surroundings (U) of the body (2) by a respective section of the roof (9), the respective end wall (7) and the respective longitudinal side wall (5).

**3.** The body according to claim 1, **characterized in that** the corner section (A) is opened on its side associated with the roof (9), the respective end wall (7) and the respective longitudinal side wall (5).

**4.** The body according to any one of the preceding claims, **characterized in that** the temperature control device (TCD) comprises a housing (23) whose dimensions are at most equal to the dimensions of the corner section (A).

**5.** The body according to claim 3 and 4, **characterized in that** the outer surfaces of the side walls of the housing (23) respectively associated with the roof (9), the respective end wall (7) and the respective longitudinal side wall (5) respectively lie **in that** plane (VS1,VL1,H1) in which the respective outer surface (9a,7a,5a) of the roof (9), the respective end wall (7) and the respective longitudinal side wall (5) lie.

**6.** The body according to one of the preceding claims, **characterized in that** the access (13) provided in the end wall (7) to which the corner section (A) is adjacent extends in the height direction beyond the underside of the corner section (A).

**7.** The body according to claim 6, **characterized in that** the access (13) provided in the end wall (7) to which the corner section (A) is adjacent has the same height as the access (14) provided in the other end wall (8).

**8.** The body according to one of the preceding claims, **characterized in that** the following applies to the free distance BS which exists between the corner section (A) and the longitudinal side wall (6) spaced therefrom:

$$SB \times n \leq BS < SB \times (n+1)$$

where SB denotes the width of a standard packing volume in which the goods to be stowed in the cargo space (11) are packed, and n is an integer number.

**9.** The body according to one of the preceding claims, **characterized in that** the following applies to the free height HF, which is present between the underside of the corner section and the loading surface:

$$SH \times i \leq HF < SH \times (i+1)$$

where SH denotes the height of a standard packing volume in which the goods to be stowed in the cargo space (11) are packed, and i is an integer number.

**10.** A swap body comprising a body (2) configured according to one of the preceding claims and supporting devices (4a - 4d) which are connected with the body (2) and which are swivable between a transport position in which they are pivoted against the floor (10) of the body (2) and a support position in which they support the body (2) above a ground at a height at which the body can be driven under by a chassis of the commercial vehicle,

**11.** A truck trailer comprising a chassis on which the wheels of the trailer are mounted and a body (2) formed according to any one of the preceding claims, the body (2) being supported by the chassis.

Fig. 1

Fig. 1a

Fig. 2

EP 4 124 546 A1

EP 4 124 546 A1

Fig. 3

Fig. 4

Fig. 5

Fig. 6

Europäisches
Patentamt

European
Patent Office

Office européen
des brevets

# EUROPEAN SEARCH REPORT

Application Number

EP 21 18 8262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 3 798 155 A1 (SCHMITZ CARGOBULL AG [DE]) 31 March 2021 (2021-03-31)<br>* claims 5,7,9; figures 1,2 *<br>* paragraphs [0002], [0005], [0017], [0018], [0019], [0023] * | 1,2,4,<br>6-11<br>3,5 | INV.<br>B62D33/04<br>B65D88/12<br>B65D88/74 |
| Y | DE 10 2011 105475 A1 (MAN TRUCK & BUS AG [DE]) 27 December 2012 (2012-12-27)<br>* figures 1-3 *<br>* paragraphs [0028], [0029], [0030], [0033] * | 3,5 | |
| X | JP 2002 193022 A (HINO MOTORS LTD) 10 July 2002 (2002-07-10)<br>* figures 1,2,3 *<br>* paragraphs [0009], [0010], [0011], [0014] * | 1,2,4,8,<br>9,11 | |
| A,D | EP 3 437 926 A1 (SCHMITZ CARGOBULL AG [DE]) 6 February 2019 (2019-02-06)<br>* claims 4,5; figures 1-5 *<br>* paragraphs [0003], [0006], [0008], [0037] * | 1,10,11 | |

TECHNICAL FIELDS
SEARCHED (IPC)

B62D
B65D
B60P

The present search report has been drawn up for all claims

| Place of search | Date of completion of the search | Examiner |
|---|---|---|
| The Hague | 3 January 2022 | Altmann, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .................................................................................................

& : member of the same patent family, corresponding
document

EPO FORM 1503 03.82 (P04C01)

**EP 4 124 546 A1**

## ANNEX TO THE EUROPEAN SEARCH REPORT
## ON EUROPEAN PATENT APPLICATION NO.

EP 21 18 8262

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2022

| Patent document cited in search report | | Publication date | Patent family member(s) | | Publication date |
|---|---|---|---|---|---|
| EP 3798155 | A1 | 31-03-2021 | NONE | | |
| DE 102011105475 | A1 | 27-12-2012 | NONE | | |
| JP 2002193022 | A | 10-07-2002 | JP 3529728 B2 | | 24-05-2004 |
| | | | JP 2002193022 A | | 10-07-2002 |
| EP 3437926 | A1 | 06-02-2019 | NONE | | |

EPO FORM P0459

For more details about this annex : see Official Journal of the European Patent Office, No. 12/82

**EP 4 124 546 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3437926 A1